**Europäisches Patentamt**

**European Patent Office**

**Office européen des brevets**

(19)

(11) Veröffentlichungsnummer : **0 376 983 B1**

(12) # EUROPÄISCHE PATENTSCHRIFT

(45) Veröffentlichungstag der Patentschrift :
**09.09.92 Patentblatt 92/37**

(51) Int. Cl.$^5$ : **B60T 17/22**

(21) Anmeldenummer : **88909472.8**

(22) Anmeldetag : **28.10.88**

(86) Internationale Anmeldenummer :
**PCT/EP88/00975**

(87) Internationale Veröffentlichungsnummer :
**WO 89/04785 01.06.89 Gazette 89/12**

(54) **UNIVERSALSTEUERGERÄT FÜR REGELEINRICHTUNGEN.**

(30) Priorität : **17.11.87 DE 3738915**

(43) Veröffentlichungstag der Anmeldung :
**11.07.90 Patentblatt 90/28**

(45) Bekanntmachung des Hinweises auf die
Patenterteilung :
**09.09.92 Patentblatt 92/37**

(84) Benannte Vertragsstaaten :
**DE FR GB IT SE**

(56) Entgegenhaltungen :
**EP-A- 0 025 913**
**DE-A- 2 928 981**
**DE-A- 3 017 410**
**DE-C- 2 841 211**
**US-A- 3 997 889**

(73) Patentinhaber : **ROBERT BOSCH GMBH**
**Postfach 30 02 20**
**W-7000 Stuttgart 30 (DE)**

(72) Erfinder : **BRÄUNINGER, Jürgen**
**Kaiserslauterer Strasse 60**
**W-7000 Stuttgart 31 (DE)**
Erfinder : **GÜTTLER, Hans**
**Heumadenstrasse 5**
**W-7101 Untergruppenbach (DE)**
Erfinder : **EMIG, Reiner**
**Geislinger Weg 27**
**W-7146 Tamm (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 376 983 B1

**Beschreibung**

Stand der Technik

Verschiedene Kraftfahrzeugtypen werden mit unterschiedlichen Regeleinrichtungen ausgestattet. So gibt es z. B. Fahrzeuge, die nur mit einem ABS, oder mit einer Kombination ABS mit ASR-Bremsregler oder ABS mit ASR-Motorregler oder ABS mit ASR-Brems- und Motorregler ausgestattet sind. Es ist bekannt, für diese Fälle unterschiedliche Steuergeräte zu benutzen. Man geht jedoch immer mehr dazu über, ein universelles Steuergerät zu benutzen, das für die aufwendigste Regeleinrichtung ausgelegt ist und das bei Einsatz in einer einfacheren Reglerausgestaltung seine Fähigkeiten nicht voll ausschöpft. Die Anschlüsse für die benötigten Komponenten sind in diesem Falle nicht alle belegt.

So sind bei einer Auslegung der Regeleinrichtung nur als ABS zwar die Anschlüsse für die Drehzahlfühler und die Bremsdrucksteuerventile belegt, jedoch sind die Anschlüsse für das Bremsdruckeinsteuerventil und für die Ansteuerung der Drosselklappe frei.

Die Erfindung, die im Anspruch 1 definiert ist, nicht auf die erwähnten Regeleinrichtungen beschränkt, sondern kann bei beliebigen Regeleinrichtungen z. B. auch Fahrwerksregeleinrichtungen Anwendung finden.

Vorteile der Erfindung

Die erfindungsgemäße Ausbildung des Steuergerätes benötigt keine Mitteilung von außen, wie das angeschaltete Regelsystem ausgebildet ist.

Es stellt nach der Installation des Regelsystems die tatsächliche Ausbildung des Regelsystems fest und speichert den festgestellten Zustand in einem nicht flüchtigen Speicher ab. Bei der folgenden Überprüfungen, z. B. immer beim Fahrzeugstart, wird nun der augenblickliche Zustand des Regelsystems ermittelt und mit dem gespeicherten verglichen. Stimmen die zu vergleichenden Ausbildungen nicht überein, z. B. weil ein Draht zu einer Komponente gebrochen ist, so wird dies erkannt und ein Fehler angezeigt.

Die Überprüfung versagt, wenn bereits bei der Einspeicherung der Ausbildung ein Fehler vorliegt und mit gespeichert wird. Um diesen Fehler zu erkennen, wird die eingespeicherte bzw. einzuspeichernde Ausbildung z. B. mittels eines Blinkkodes angezeigt und dieser wird vom Fahrer bzw. dem Monteur auf Richtigkeit überprüft. Legt man diese Überprüfung in der bedienungsanleitung fest, so kann das Einspeichern einer falschen Ausbildung nur bei Nicht-Einhalten der bedienungsanleitung erfolgen.

Man kann vom Steuergerät auch erkennen lassen, ob die Stromversorgung durch eine 12 V- oder 24 V-Anlage erfolgt. Auch diese Auslegung kann mit überprüft, abgespeichert und zum Vergleich herangezogen werden.

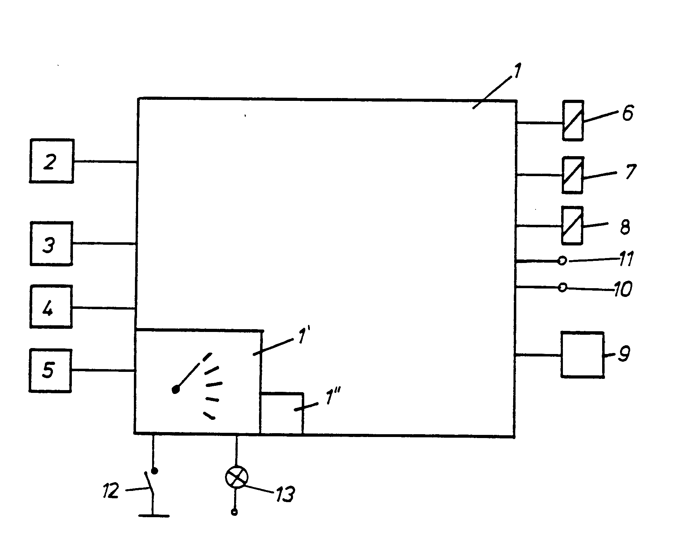

Anhand der Zeichnung wird ein Ausführungsbeispiel der Erfindung erläutert. Ein Universalsteuergerät ist dort mit 1 bezeichnet. An ihm sind vier Drehzahlfühler 2 bis 5 und drei Dreistellungsventile (3/3 Ventile) 6, 7 und 8 angeschaltet, sowie eine Einrichtung 9 zur Beeinflussung des Motormoments. Dagegen ist der Ausgang 10, an dem ein Bremsdruckeinsteuerventil für die ASR-bremsregelung angeschaltet werden kann und der Ausgang 11 an dem ein viertes 3/3 Ventil (Einzelradregelung auch hinten) angeschlossen werden kann, nicht belegt.

Nach Montage des Systems im Fahrzueg wird dem Steuergerät 1 über einen Schalter 12 der Befehl erteilt durch Ansteuern der verschiedenen Ein- und Ausgänge (durch den Abtaster 1') die vorhandene Ausbildung des Systems aufgrund der Rückmeldungen festzustellen und diesen Zustand in einem nicht flüchtigen Speicher 1" festzuhalten. Um eine Fehleinspeicherung bei Vorliegen eines Fehlers zu vemeiden, wird die eingespeicherte Ausbildung durch Ansteuern einer Blinklampe 13 dem Monteur mitgeteilt.

Weil er für die tatsächlich vorhandene Ausbildung den richtigen Blinkkode kennt, kann er durch Vergleich feststellen, ob die richtige Auslegung eingespeichert ist.

Im betrieb des Fahrzeuges wird dann von Zeit zu Zeit die augenblickliche "Ausbildung" erneut abgetastet und mit der gespeicherten Ausbildung verglichen. Stimmen die Ausbildungen nicht überein, so wird ein Fehler z. B. mittels der Lampe 13 angezeigt.

**Patentansprüche**

1. Universalsteuergerät, das anstelle von mehreren unterschiedlich ausgestalteten Steuergeräten anwendbar ist, wobei bei wenigstens einer möglichen Anwendung des Universalsteuergerätes nicht alle dessen Ein- bzw. Ausgänge belegt sind, wobei bei einer bestimmten Anwendung aufgrund eines von außen kommenden Befehls das Universalsteuergerät aufgrund von Rückmeldungen von den an den Ein- und Ausgängen des Universalsteuergerätes angeschlossenen Komponenten, die belegten Ein- und Ausgänge feststellt, und dieser Feststellung entsprechende Daten nicht flüchtig speichert, wobei im späteren Gebrauch außerdem von Zeit zu Zeit weitere Rückmeldungen ausgelöst werden und wobei die durch diese Rückmeldungen erhaltenen Daten mit den gespeicherten Daten verglichen werden und bei Abweichen ein Fehler angezeigt wird.

**2.** Universalsteuergerät nach Anspruch 1, dadurch gekennzeichnet, daß die einzuspeichernde bzw. eingespeicherte Belegung zwecks Überprüfung angezeigt und auf Richtigkeit überprüft wird.

## Claims

**1.** Universal control unit which can be used instead of a plurality of differently designed control units, not all of the inputs and outputs thereof being allocated in the case of at least one possible application of the universal control unit, the universal control unit determining the allocated inputs and outputs on the basis of answer-back signals from the components connected to the inputs and outputs of the universal control unit in the case of a specific application, on the basis of an externally produced command, and the universal control unit storing data corresponding to this determination in a non-volatile manner, further answer-back signals also being triggered from time to time in later use, and the data received by means of these answer-back signals being compared with the stored data, and a fault being indicated in the case of a discrepancy.

**2.** Universal control unit according to Claim 1, characterised in that the allocation which is to be stored, or is stored, is indicated for checking and is checked for correctness.

## Revendications

1°) Dispositif de commande universel utilisable à la place de plusieurs dispositifs de commande de conception différente, et au moins pour une application possible du dispositif de commande universel, toute ses entrées et sorties ne sont pas occupées et pour une application déterminée à la suite d'un ordre extérieur le dispositif de commande universel détermine à l'aide des signaux en retour, fournis par les composants reliés aux entrées et sorties du dispositif de commande universel, celles des entrées et sorties qui sont occupées et il met en mémoire de manière non fugitive les données correspondant à cette constatation, et au cours de l'utilisation ultérieure, de temps à autre on fournit en retour des signaux contenant ces données pour les comparer aux données inscrites en mémoire et afficher un défaut en cas de différence.

2°) Dispositif de commande universel selon la revendication 1, caractérisé en ce que l'occupation à mettre en mémoire ou qui est déjà inscrite en mémoire est affichée pour le contrôle, pour permettre d'y vérifier l'absence d'erreur.